**Europäisches Patentamt**

**European Patent Office**

**Office européen des brevets**

(19)

(11) Veröffentlichungsnummer: **0 058 777**
**A2**

# (12) EUROPÄISCHE PATENTANMELDUNG

(21) Anmeldenummer: **81110636.8**

(22) Anmeldetag: **21.12.81**

(51) Int. Cl.³: **H 02 M 3/335**

(30) Priorität: **25.02.81 DE 3107009**

(43) Veröffentlichungstag der Anmeldung: **01.09.82**
**Patentblatt 82/35**

(84) Benannte Vertragsstaaten: **AT FR IT**

(71) Anmelder: **Blaupunkt-Werke GmbH,**
**Robert-Bosch-Strasse 200, D-3200 Hildesheim (DE)**

(72) Erfinder: **Diethelm, Otto, Ing. grad., Brinkstrasse 18,**
**D-3207 Adlum (DE)**

(74) Vertreter: **Eilers, Norbert, Dipl.-Phys., Blaupunkt-Werke**
**GmbH Robert-Bosch-Strasse 200, D-3200 Hildesheim**
**(DE)**

(54) Spannungswandler für ein Fernsehempfangsgerät.

㉗ Es wird ein Spannungswandler für ein Fernsehempfangsgerät mit einer von einer Steuerstufe geschalteten
Endstufe und einem der Endstufe mit seiner Primärwicklung
nachgeschalteten Transformator, dessen Sekundärwicklungen Versorgungsspannungen für das Fernsehempfangsgerät entnehmbar sind, vorgeschlagen, dessen
Endstufe von der Steuerstufe mit einer zwischen 50 kHz und
300 kHz liegenden Frequenz geschaltet wird.

EP 0 058 777 A2

# BLAUPUNKT-WERKE GMBH 32 HILDESHEIM, Robert-Bosch-Straße 200

PLI-Hi Gebranzig/TEX1-Li          - 1 -                    20.2.1981
                                                          R.Nr.  1691

## Stand der Technik

Die vorliegende Erfindung betrifft einen Spannungswandler für
ein Fernsehempfangsgerät mit einer von einer Steuerstufe geschalteten Endstufe und einem der Endstufe mit seiner Primärwicklung
nachgeschalteten Transformator, dessen Sekundärwicklungen Versorgungsspannungen für das Fernsehempfangsgerät entnehmbar sind.

Spannungswandler dieser Art, die beispielsweise als Sperrwandler
ausgebildet sind, dienen der Versorgung von Fernsehempfangsgeräten
mit den erforderlichen Betriebsspannungen, wobei die Frequenz,
mit der die Endstufe von der Steuerstufe geschaltet wird, üblicherweise zwischen 10 kHz und 30 kHz liegt.

Spannungswandler der eingangs erwähnten Art sind hinsichtlich der
erforderlichen Größe der Transformatoren und des mit ihnen erzielbaren Wirkungsgrads der Stromversorgung von Fernsehempfangsgeräten
verbesserungswürdig.

## Die Erfindung und ihre Vorteile

Die Aufgabe, einen Spannungswandler der eingangs erwähnten Art zu
entwickeln, mit dem sich bei einfachem Aufbau ein hoher Wirkungsgrad bei der Stromversorgung von Fernsehempfangsgeräten unter Erzielung einer hohen Betriebssicherheit und -zuverlässigkeit erreichen läßt, wird gemäß der vorliegenden Erfindung dadurch gelöst,
daß die Endstufe von der Steuerstufe mit einer zwischen 50 kHz und
300 kHz liegenden Frequenz geschaltet wird.

Vorzugsweise könnte die Frequenz zwischen 80 kHz und 150 kHz liegen.

**BLAUPUNKT-WERKE GMBH** 32 HILDESHEIM, Robert-Bosch-Straße 200

PLI-Hi Gebranzig/TEX1-Li     - 2 -       20.2.1981
                                    R.Nr. 1691

Gemäß einer vorteilhaften Ausgestaltung der Erfindung läßt sich die Hochspannung für die Bildröhre des Fernsehempfangsgeräts mit hohem Wirkungsgrad und auf einfache Weise dadurch gewinnen, daß der Transformator eine Sekundärwicklung mit einer Gleichrichteranordnung zur Gewinnung der Hochspannung für die Bildröhre des Fernsehempfangsgeräts aufweist.

Gemäß einer weiteren vorteilhaften Ausgestaltung der Erfindung läßt sich ein einfacher Aufbau der Ablenkstufen und ein Betrieb der Ablenkstufen mit hohem Wirkungsgrad, wobei die Ablenkstufen nur eine geringe Leistungsaufnahme aufweisen, dadurch erzielen, daß der Transformator weitere Sekundärwicklungen aufweist und diesen Sekundärwicklungen die Ablenkstufen des Fernsehempfangsgerätes nachgeschaltet sind.

Der Wirkungsgrad des Spannungswandlers läßt sich gemäß einer vorteilhaften Ausgestaltung der Erfindung, wobei zugleich parasitäre Schwingungen im Bereich des Transformators vermieden werden, noch zusätzlich dadurch verbessern, daß die Wicklungen des Transformators als Folienwicklungen aus mit Metall beschichteten Kunststofffolien ausgebildet sind.

Bei einem derartigen Spannungswandler lassen sich beide Betriebsphasen, die Hinlaufphase und die Rücklaufphase, sekundärseitig belasten, wobei sich an der Sekundärwicklung zur Gewinnung der Hochspannung für die Bildröhre eine ausreichend hohe Spannung ausbildet, so daß die Hochspannung für die Bildröhre mit einfach aufgebauten Gleichrichteranordnungen, beispielsweise Spannungsverdopplern, gewonnen werden kann, wenn gemäß einer weiteren vorteilhaften Ausgestaltung der Erfindung die Endstufe des Spannungswandlers als Gegentaktendstufe ausgebildet wird.

Der Wirkungsgrad eines erfindungsgemäßen Spannungswandlers läßt
sich zusätzlich noch dadurch wesentlich erhöhen, daß gemäß einer
vorteilhaften Weiterbildung der Erfindung die Endstufe des Spannungswandler mit Feldeffekttransistoren aufgebaut wird.

Die Vorteile der vorliegenden Erfindung liegen insbesondere darin,
daß mit einem einzigen Transformator, dem Transformator des erfindungsgemäßen Spannungswandlers, alle erforderlichen Betriebsspannungen, insbesondere die Hochspannung für die Bildröhre und
die Betriebsspannung für die Ablenkstufen des Fernsehempfangsgeräts, gewonnen werden können. Daraus ergeben sich die Vorteile,
daß bei Einsatz eines erfindungsgemäßen Spannungswandlers auf
einen Zeilentransformator verzichtet werden kann und die Schalter
der Ablenkstufen, insbesondere der Zeilenablenkstufe, nur die
zum Betrieb der Ablenkstufen erforderlichen Ströme schalten
müssen, da die anderen Betriebsspannungen dem Transformator
direkt entnommen werden können und nicht von den Ablenkstufen
mittels eines weiteren Transformators, wie beispielsweise mittels
einer Zeilenendstufe und eines Zeilentransformators, gewonnen
werden müssen. Somit weisen die Ablenkstufen, insbesondere die
Zeilenablenkstufe bei Fernsehempfangsgeräten mit erfindungsgemäßen
Spannungswandlern einen wesentlich geringeren Leistungsbedarf auf
als es bei bisherigen Fernsehempfangsgeräten üblich ist. Die Ablenkstufen in Fernsehempfangsgeräten mit erfindungsgemäßen Spannungswandlern weisen daher eine hohe Lebensdauer und Zuverlässigkeit auf, wobei die Ablenkstufen mit Halbleiterbauelementen kleiner Leistungsklassen aufgebaut werden können.

Zeichnung

Die Erfindung wird nachfolgend an einer Figur näher erläutert.

In dieser Figur ist das Schaltbild eines erfindungsgemäßen Spannungswandlers dargestellt.

Über die Anschlußklemmen A und B gelangt die Betriebsspannung, beispielsweise eine Netzwechselspannung, an den Spannungswandler. Die vom Gleichrichter, beispielsweise einem Brückengleichrichter, gleichgerichtete Spannung lädt den Kondensator $C_1$ auf und kann diesem als Versorgungsspannung für den Spannungswandler entnommen werden.

Diese Spannung gelangt einerseits an den Mittelanzapf der Primärwicklung P und in die Steuerstufe S. Die Steuerstufe S schaltet die von Feldeffekttransistoren $T_1$ und $T_2$ gebildete Gegentaktendstufe des Spannungswandlers mit einer Frequenz, die zwischen 50 kHz und 300 kHz liegt im Gegentakt. Am Widerstand $R_1$ fällt eine von den durch die Transistoren $T_1$ und $T_2$ fließenden Spitzenströmen abhängige Spannung ab, mit der sich die Spitzenströme über die Steuerstufe S begrenzen lassen. Mit der Sekundärwicklung $S_5$ des Transformators T und den Dioden $D_8$ und $D_9$ wird eine von der Belastung des Spannungswandlers abhängige Regelspannung gewonnen, mit der sich der Spannungswandler über die Steuerstufe S regeln läßt.

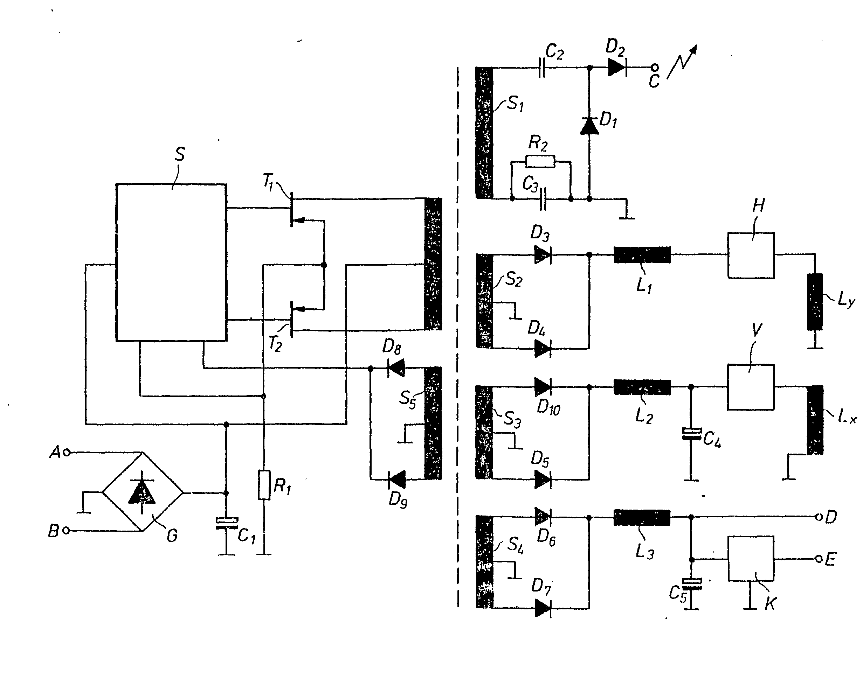

Mit der Sekundärwicklung $S_1$ wird die Hochspannung für die in der Figur nicht dargestellte Bildröhre des Fernsehempfangsgerätes gewonnen. Hierbei bildet die von den Dioden $D_1$ und $D_2$, den Kondensatoren $C_2$ und $C_3$ sowie dem Widerstand $R_2$ gebildete Schaltungsanordnung einen Spannungsverdoppler nach Art der bekannten Delon-Schaltung. Am Anschlußpunkt C steht die erforderliche Hochspannung an.

**BLAUPUNKT-WERKE GMBH** 32 HILDESHEIM, Robert-Bosch-Straße 200

PLI-Hi Gebranzig/TEX1-Li      - 5 -              20.2.1981
                                                R.Nr. 1691

Mit der Sekundärwicklung $S_2$ wird mittels der Dioden $D_3$ und $D_4$ die Betriebsspannung für die Horizontalablenkschaltung H, die in an sich bekannter Weise zeilenfrequent gesteuerte Schalter aufweisen kann, gewonnen. Der Horizontalablenkschaltung ist die Horizontalablenkspulenanordnung $L_Y$ nachgeschaltet und die Ladeinduktivität $L_1$ vorgeschaltet.

Der Sekundärwicklung $S_3$ ist über die Dioden $D_{10}$ und $D_5$, die Ladedrossel $L_2$ und den Kondensator $C_4$ die vertikalfrequent arbeitende Vertikalablenkschaltung V mit der Vertikalablenkspulenanorndung $L_X$ nachgeschaltet.

Mit der Sekundärwicklung $S_4$ und den Dioden $D_6$ und $D_7$ sowie der Ladeinduktivität $L_3$ und dem Kondensator $C_5$ werden weitere Betriebsspannungen gewonnen, die an der Anschlußklemme D und über den Konstantspannungshalter K an der Anschlußklemme E abgreifbar sind.

Die Frequenz, mit der die Steuerstufe S die Feldeffekttransistoren $T_1$ und $T_2$ schaltet, kann in ihrer Frequenz mit der Zeilenfrequenz verkoppelt werden. So kann diese Frequenz beispielsweise ein ganzzahliges Vielfaches der Zeilenfrequenz betragen.

Aufgrund des Einsatzes schnell und verlustfrei schaltender Bauelemente, wie beispielsweise Feldeffekttransistoren in der Endstufe, tritt an den Sekundärwicklungen des Transformators eine hohe Windungsspannung auf.

**BLAUPUNKT-WERKE GMBH** 32 HILDESHEIM, Robert-Bosch-Straße 200

PLI-Hi Gebrandig/TEXi-Li     - 1 -                    20.2.1981
                                                     R.Nr. 1691

Spannungswandler für ein Fernsehempfangsgerät

Ansprüche

1. Spannungswandler für ein Fernsehempfangsgerät mit einer von
   einer Steuerstufe geschalteten Endstufe und einem der Endstufe mit seiner Primärwicklung nachgeschalteten Transformator, dessen Sekundärwicklungen Versorgungsspannungen für
   das Fernsehempfangsgerät entnehmbar sind, dadurch gekennzeichnet, daß die Endstufe ($T_1$, $T_2$) von der Steuerstufe (S)
   mit einer zwischen 50 kHz und 300 kHz liegenden Frequenz
   geschaltet wird.

2. Spannungswandler nach Anspruch 1, dadurch gekennzeichnet,
   daß der Transformator (T) eine Sekundärwicklung ($S_1$) mit
   einer Gleichrichteranordnung ($D_1$, $D_2$, $C_2$, $C_3$) zur Gewinnung
   der Hochspannung für die Bildröhre des Fernsehempfangsgeräts
   aufweist.

3. Spannungswandler nach einem der Ansprüche 1 und 2, dadurch
   gekennzeichnet, daß der Transformator (T) weitere Sekundärwicklungen ($S_2$, $S_3$) aufweist und diesen Sekundärwicklungen
   ($S_2$, $S_3$) die Ablenkstufen (H, V, $L_Y$, $L_X$) des Fernsehempfangsgeräts nachgeschaltet sind.

4. Spannungswandler nach einem der Ansprüche 1 bis 3, dadurch
   gekennzeichnet, daß die Wicklungen des Transformators (T)
   als Folienwicklungen aus mit Metall beschichteten Kunststofffolien ausgebildet sind.

5. Spannungswandler nach einem der Ansprüche 1 bis 4, dadurch
   gekennzeichnet, daß die Endstufe ($T_1$, $T_2$) des Spannungswandlers als Gegentaktendstufe ausgebildet ist.

## BLAUPUNKT-WERKE GMBH 32 HILDESHEIM, Robert-Bosch-Straße 200

PLI-Hi Gebranzig/TEN1-Li        - 2 -                    20.2.1981
                                                        R.Nr. 1691

6.    Spannungswandler nach einem der Ansprüche 1 bis 5, dadurch
      gekennzeichnet, daß die Endstufe ($T_1$, $T_2$) des Spannungs-
      wandlers mit Feldeffekttransistoren aufgebaut ist.